# EUROPÄISCHE PATENTSCHRIFT

(11) **EP 2 352 702 B1**
(45) Veröffentlichungstag und Bekanntmachung des Hinweises auf die Patenterteilung: **19.02.2020**
(21) Anmeldenummer: 09751817.9
(22) Anmeldetag: 09.11.2009
(51) Int. Cl.: C02F 1/44, B01D 63/10, C02F 1/469, C02F 1/00, C02F 103/04

(54) **WASSERAUFBEREITUNGSVERFAHREN SOWIE DAFÜR GEEIGNETE MEMBRANTRENNVORRICHTUNG UND WASSERAUFBEREITUNGSANLAGE**
WATER TREATMENT PROCESS, AND MEMBRANE SEPARATION PROCESS AND WATER TREATMENT PLANT SUITABLE THEREFOR
PROCÉDÉ DE TRAITEMENT DE L'EAU ET DISPOSITIF SÉPARATEUR À MEMBRANE CONVENANT POUR CELUI-CI, AINSI QU'INSTALLATION DE TRAITEMENT DE L'EAU

(30) Priorität: 11.11.2008 DE 102008057669
(43) Veröffentlichungstag der Anmeldung: 10.08.2011
(73) Patentinhaber: P & LS Holding GmbH, 5310 Mondsee (AT)
(72) Erfinder: NEUBRAND, Wolfgang, 95326 Kulmbach (DE); BEUSSHAUSEN, Swen, 79585 Steinen (DE); JOHANN, Jürgen, 69226 Nussloch (DE)
(74) Vertreter: Patentanwaltskanzlei Cartagena
(86) Internationale Anmeldenummer: PCT/EP2009/007981
(87) Internationale Veröffentlichungsnummer: WO 2010/054782

(56) Entgegenhaltungen:
- EP-A2- 1 022 051
- WO-A1-00/07700
- WO-A1-2005/113120
- WO-A1-2008/105580
- US-A1- 2004 222 158
- US-A1- 2005 029 192
- US-A1- 2006 144 787
- US-A1- 2008 164 207

## Beschreibung

Beschrieben wird ein mehrstufiges Verfahren zur Aufbereitung von Wasser, bei dem ein Wasserstrom in einer Membrantrennstufe und einer dieser nachgeschalteten Deionisationseinrichtung mit mindestens einer Konzentratkammer und mindestens einer Diluatkammer aufgereinigt wird. Des Weiteren wird eine Membrantrennvorrichtung beschrieben, die in einem solchen Verfahren verwendet werden kann, sowie eine Anlage zur Aufbereitung von Wasser, die sich zur Durchführung des Verfahrens eignet.

Die Aufbereitung von Wasser ist in der heutigen Zeit von stets steigender Bedeutung. Neben Trinkwasser werden insbesondere in der chemischen und pharmazeutischen Industrie hochreine Prozesswässer benötigt, die in großer Menge möglichst preiswert bereitgestellt werden müssen. Hochreines Wasser wird des Weiteren vor allem auch in der Halbleiterindustrie benötigt, beispielsweise zur Spülung von Siliziumwafern, insbesondere nach Ätzprozessen. Die Anforderungen an die Reinheit des Wassers sind in diesem Bereich bekanntlich besonders hoch.

Stand der Technik bei der Bereitstellung von Reinstwasser ist ein mehrstufiges Verfahren umfassend eine erste Stufe, in der Rohwasser enthärtet und/oder bereits teilweise entsalzt wird, eine zweite Stufe, in der das Wasser aus der ersten Stufe in einem druckgetriebenen Membrantrennverfahren weiter aufgereinigt wird und eine dritte Stufe, in der das Wasser abschließend im Wesentlichen vollständig deionisiert wird, beispielsweise durch Elektrodeionisation. Darüber hinaus können noch Verfahrensschritte insbesondere zur Eliminierung von organischen Verunreingungen vorgesehen sein.

Die Wasserenthärtung und/oder Entsalzung in der ersten Stufe erfolgt in der Regel durch Einsatz von einem oder mehreren Ionentauschern. Für die Enthärtung werden bevorzugt Kationentauscher in Natriumform eingesetzt, während für die Entsalzung Kombinationen aus Kationen- und Anionentauschern üblich sind. Die ionische Gesamtfracht des aufzubereitenden Wassers kann so bereits merklich reduziert werden.

Als Membrantrennverfahren kommen insbesondere die Umkehrosmose sowie die Nanofiltration, ggf. auch in Kombination, in Frage. Wenn im Rohwasser größere Mengen an gelöstem Kohlendioxid vorhanden sind, so kann dieser Verfahrensablauf noch um einen Entgasungsschritt vor oder nach dem Membrantrennverfahren ergänzt werden.

Aus der EP 1 022 051 A2 ist ein Verfahren zur Wasseraufbereitung bekannt, bei dem Filtrationsmodule umfassend mehrere separate Spiralwickelfiltermodule eingesetzt werden, die in einem gemeinsamen Druckbehälter angeordnet und seriell über ein Verbindungsstück gekoppelt sind. Das die Membranen der Spiralwickelfiltermodule durchdringende Permeat wird in einem Sammelkanal zusammengeführt.

Die US 2008/164207 A1 betrifft eine Vorrichtung zur Durchführung von Reinigungen mittels Pervaporation, wobei die Vorrichtung mehrere Membranmodule innerhalb eines gemeinsamen Druckbehälters umfasst. Innerhalb des Druckbehälters ist ein Permeat-Sammelrohr angeordnet, über das aus allen Wickelmodulen Permeat abgeführt wird. Die beschriebene Vorrichtung taugt entsprechend nicht zur Erzeugung unterschiedlicher Permeatströme mit unterschiedlicher elektrischer Leitfähigkeit.

Sofern eine hohe Wasserausbeute von Bedeutung ist, kann das Konzentrat aus der Membrantrennstufe in einer weiteren zusätzlichen Membrantrennstufe aufbereitet werden, wobei sich das dabei erhaltene Permeat in der Regel aufgrund seiner hohen elektrischen Leitfähigkeit nicht unmittelbar in den Schritt 3 (Deionisation) überführen lässt. Stattdessen wird es üblicherweise zurückgeführt und vor der Membrantrennstufe dem aufzubereitenden Wasser zugegeben.

Aus der US 2006/0144787A1 ist ein "Elektro-Druck-Membran-Deionisierungssystem bekannt, in dem Flüssigkeiten mittels Nano- oder Umkehrosmose aufbereitet werden und dann einen nachgeschalteten Elektrodialyseschritt durchlaufen. Eine Auftrennung der Flüssigkeiten in zwei Permeatströme unterschiedlicher elektrischer Leitfähigkeit wird nicht beschrieben.

In der WO 00/07700 A1 ist eine Wasseraufbereitungsanlage umfassend Umkehrosmose- sowie Deionisations-Einheiten beschrieben, in der mehrere Umkehrosmose-Einheiten hintereinander geschaltet sein können, wobei das eintretende Wasser jeweils in einen Permeat- und einen Retentatstrom aufgespalten wird. Die resultierenden Permeatströme werden anschließend zusammengeführt.

In der US 2005/0029192 A1 ist ein Druckrohr mit mehreren in Serie geschalteten Membrantrenneinheiten offenbart. Das Druckrohr verfügt über einen Wassereinlass und einen Wasserauslass sowie ein zentrales Permeatsammelrohr. Dieses verfügt über zwei Ausgänge. In zentraler Position findet sich in dem Permeatsammelrohr ein sogenannter "flow devider". Durch Verschiebung dieses Elements lässt sich die Qualität der durch die Auslässe austretenden Permeatströme variieren.

Elektrodeionisationsvorrichtungen erfordern in üblichen Bauarten stets eine Lösung, die die aus dem aufzubereitenden Wasser abgetrennten Ionen aufnimmt und aus der Vorrichtung abführt (Konzentrat). Diese Lösung fließt durch mindestens eine Konzentratkammer, das aufzubereitende Wasser durch mindestens eine Diluatkammer. Eine hohe ionische Leitfähigkeit in den Konzentratkammern wird dabei bekanntlich insbesondere dadurch erzielt, dass
(a) eine Zudosierung z.B. von Neutralsalzen erfolgt,
(b) das Konzentrat durch die Konzentratkammern rezirkuliert wird, so dass sich die abgetrennten Ionen dort anreichern oder
(c) die Konzentratkammern (wie auch die Diluatkammern) mit lonentauscherharzen gefüllt werden.

Alternativ kann auch Konzentrat aus einer vorgeschalteten Membrantrennstufe in die Konzentratkammern einer Elektrodionisationsvorrichtung eingespeist werden. Allerdings muss dieses in der Regel in einem Zwischenschritt aufgearbeitet werden, wie dies aus der WO 2005/ 113120 A1 bekannt ist.

Der vorliegenden Erfindung lag die Aufgabe zugrunde, eine technische Lösung zur mehrstufigen Aufbereitung von Wasser bereitzustellen, die gegenüber bekannten Lösungen einen möglichst einfach gehaltenen Aufbau aufweisen soll, insbesondere was die Deionisationsstufe anbelangt.

Diese Aufgabe wird gelöst durch das Verfahren mit den Merkmalen des Anspruchs 1 sowie die Wasseraufbereitungsanlage mit den Merkmalen des Anspruchs 5. Bevorzugte Ausführungsformen des erfindungsgemäßen Verfahrens finden sich in den abhängigen Ansprüchen 2 bis 4, bevorzugte Ausführungsformen der erfindungsgemäßen Wasseraufbereitungsanlage in den abhängigen Ansprüchen 6 und 7.

Bei dem erfindungsgemäßen Verfahren handelt es sich um ein mehrstufiges Verfahren zur Aufbereitung von Wasser, insbesondere zur Herstellung von Reinstwasser, das sich für die eingangs genannten Anwendungen eignet. Bei dem Verfahren wird ein Wasserstrom in einer Membrantrennstufe und einer dieser nachgeschalteten Deionisationseinrichtung mit mindestens einer Konzentratkammer und mindestens einer Diluatkammer, insbesondere in einer entsprechenden Elektrodeionisationseinrichtung, aufgereinigt.

Permeat aus einer Membrantrennstufe weist abhängig von der Zulaufkonzentration eine variierende Zusammensetzung auf. Am Zulauf ist der Salzgehalt des aufzubereitenden Wassers relativ klein, weswegen auch das Permeat einen relativ geringen Salzgehalt und eine relativ geringe elektrische Leitfähigkeit aufweist. Je weiter man sich jedoch innerhalb einer Membrantrennstufe vom Zulauf entfernt, desto stärker werden Salze im Konzentrat angereichert. Als Folge hat auch das Permeat, das an dieser Stelle der Membrantrennstufe von der Membran produziert wird, in aller Regel einen höheren Salzgehalt und auch eine höhere Leitfähigkeit.

Die vorliegende Erfindung macht sich diesen Effekt zunutze, indem salzarmes Permeat aus einer Membrantrennstufe auf der Diluatseite der Membran einer nachgeschalteten Deionisationseinrichtung eingespeist wird, während salzreiches Permeat der Konzentratseite der Deionisationseinrichtung zugeführt wird.

Das erfindungsgemäße Verfahren zeichnet sich entsprechend insbesondere dadurch aus, dass der aufzubereitende Wasserstrom in der Membrantrennstufe in einen Konzentratstrom und zwei oder mehr Permeatströme unterschiedlicher elektrischer Leitfähigkeit aufgetrennt wird. Zumindest der Permeatstrom mit der höchsten elektrischen Leitfähigkeit wird teilweise oder vollständig in die mindestens eine Konzentratkammer der nachgeschalteten Deionisationseinrichtung eingespeist. Zumindest der Permeatstrom mit der niedrigsten elektrischen Leitfähigkeit wird teilweise oder vollständig in die mindestens eine Diluatkammer eingespeist.

Die Auftrennung des Permeatstroms wird realisiert, indem der Wasserstrom in der Membrantrennstufe mit mindestens zwei Membranmodulen, besonders bevorzugt mit genau zwei Membranmodulen, in Kontakt gebracht wird, die derart angeordnet sind, dass sie von dem aufzubereitenden Wasser nacheinander angeströmt werden. Die Membranmodule weisen jeweils eine separate Permeatabführung auf.

Bei den mindestens zwei Membranmodulen handelt es sich bevorzugt um Umkehrosmosemodule und Nanofiltrationsmodule. Geeignete Module werden im Folgenden noch beschrieben.

Ordnet man z.B. zwei Umkehrosmosemodule gleicher Bauart so an, dass sie nacheinander angeströmt werden, so produziert dann in der Regel das Membranmodul, das zuerst angeströmt wird, den Permeatstrom mit der niedrigsten elektrischen Leitfähigkeit. Das Membranmodul, das zuletzt angeströmt wird, produziert in diesem Fall den Permeatstrom mit der höchsten elektrischen Leitfähigkeit. Gleiches gilt grundsätzlich auch für Nanofiltrationsmodule gleicher Bauart.

Grundsätzlich kann in der Membrantrennstufe z.B. ein Nanofiltrationsmodul und ein Umkehrosmosemodul so angeordnet werden, dass zuerst das Nanofiltrationsmodul und dann das Umkehrosmosemodul angeströmt wird. In der Regel produziert das Nanofiltrationsmodul, auch wenn es zuerst angeströmt wird, immer den Permeatstrom mit der höheren elektrischen Leitfähigkeit, da es üblicherweise zumindest für die am häufigsten auftretenden einwertigen Ionen - im Gegensatz zur Umkehrosmose - kein grosses Hindernis darstellt.

Erfindungsgemäß kommt allerdings eine Kombination aus einem Nanofiltrationsmodul und einem Umkehrosmosemodul zum Einsatz, bei der das Umkehrosmosemodul zuerst angeströmt wird und dann erst das Nanofiltrationsmodul.

Aus der Deionisationseinrichtung austretendes Konzentrat wird in bevorzugten Ausführungsformen des erfindungsgemäßen Verfahrens zumindest teilweise rückgeführt und dem Wasserstrom stromaufwärts, insbesondere vor der Membrantrennstufe, wieder zugesetzt. Dadurch kann die Wasserausbeute des Gesamtsystems erhöht werden.

Vor Einspeisung des Wasserstroms in die Membrantrennstufe wird dieser bevorzugt mittels mindestens eines lonentauschers teilentsalzt und/oder enthärtet. Geeignete lonentauscher sind dem Fachmann bekannt.

Besonders bevorzugt weist der in die mindestens eine Konzentratkammer der Deionisationseinrichtung einzuspeisende Permeatstrom eine elektrische Leitfähigkeit im Bereich zwischen 5 µS/cm und 500 µS/cm auf. Innerhalb dieses Bereiches sind Werte zwischen 10 µS/cm und 300 µS/cm, insbesondere von ca. 100 µS/cm, weiter bevorzugt. Zum Erreichen dieses Leitfähigkeitsbereichs kann der Permeatstrom ggf. aufkonzentriert oder verdünnt werden (z.B. durch Erhöhen des Anteils an höher oder niedriger konzentriertem Permeat).

Das erfindungsgemäße Verfahren bietet insbesondere die folgenden Vorteile:
- Eine ausreichende Leitfähigkeit in den Konzentratkammern der Deionisationseinrichtung kann auch ohne Zudosierung von Neutralsalzen oder Kreislaufführung des Konzentrates sichergestellt werden. Der apparative Aufwand für diese Maßnahmen entfällt.
- Die Erzeugung von Permeat mit geringer und hoher Leitfähigkeit kann im selben Druckgehäuse erfolgen, die Konstruktion der einzusetzenden Membrantrennvorrichtung kann also sehr einfach gehalten werden.

Insbesondere auf den letzten Aspekt wird im Folgenden noch eingegangen.

Eine zur Durchführung des Verfahrens geeignete Membrantrennvorrichtung ist derart ausgebildet, dass in ihr mindestens zwei Permeatströme mit unterschiedlicher elektrischer Leitfähigkeit erzeugt werden können. Sie weist die mindestens zwei Membranmodule auf, die derart angeordnet sind, dass sie von dem aufzubereitenden Wasser, wie oben bereits erwähnt, nacheinander angeströmt werden können.

Die Membranmodule der Membrantrennvorrichtung sind innerhalb eines gemeinsamen Druckbehälters angeordnet. Geeignete Druckbehälter sind dem Fachmann bekannt, es handelt sich dabei in der Regel um allgemein übliche Behälter zur Aufnahme von Membranmodulen für die Umkehrosmose.

Besonders bevorzugt ist der Druckbehälter ein einfaches Rohr, in dem die mindestens zwei Membranmodule in axialer Richtung hintereinander angeordnet sind.

Als Membranmodule eignen sich beispielsweise Spiral-Wickelmodule. Diese können eine oder mehrere Membrantaschen aufweisen, die zusammen mit einem netzartigen Spacer spiralförmig um ein perforiertes Permeatsammelrohr gewickelt sind. Die Membrantaschen bestehen dabei vorzugsweise aus zwei Membranen, zwischen denen der erwähnte Spacer angeordnet ist. Die Taschen sind an drei Seiten geschlossen und an der vierten, offenen Seite an das Permeatsammelrohr angeschlossen. Ein solches Modul wird in axialer Richtung von aufzubereitendem Wasser durchflossen, während das Permeat spiralförmig dem Sammelrohr zufließt.

Die mindestens zwei Membranmodule der Membrantrennvorrichtung weisen jeweils einen separaten Permeatabfluss auf durch welche die zwei Permeatströme aus dem Druckbehälter herausgeführt werden. Über diese können dann die Permeatströme mit unterschiedlicher elektrischer Leitfähigkeit ihrer jeweiligen Bestimmung zugeführt werden.

Eine erfindungsgemäße Anlage zur Aufbereitung von Wasser umfasst die beschriebene Membrantrennvorrichtung sowie mindestens eine Deionisationseinrichtung, insbesondere mindestens eine Elektrodeionisationseinrichtung, mit mindestens einer Konzentratkammer und mindestens einer Diluatkammer. Insbesondere eignet sich die erfindungsgemäße Anlage zur Durchführung des erfindungsgemäßen Wasseraufbereitungsverfahrens.

In der Membrantrennvorrichtung der erfindungsgemäßen Anlage sind mindestens zwei Membranmodule derart angeordnet, dass sie von dem aufzubereitenden Wasser nacheinander angeströmt werden können, wobei die mindestens zwei Membranmodule jeweils einen separaten Permeatabfluss aufweisen.

Der Permeatabfluss des zuerst angeströmten Membranmoduls ist mit der mindestens einen Diluatkammer und der Permeatabfluss des zuletzt angeströmten Membranmoduls ist mit der mindestens einen Konzentratkammer gekoppelt. Bei dem zuerst angeströmten Membranmodul handelt es sich um ein Umkehrosmosemodul und bei dem zuletzt angeströmten Membranmodul um ein Nanofiltrationsmodul.

Weitere Merkmale der Erfindung ergeben sich aus der nachfolgenden Beschreibung der Zeichnung in Verbindung mit den Unteransprüchen. Die einzelnen Merkmale können dabei jeweils für sich oder zu mehreren in Kombination miteinander bei einer Ausführungsform der Erfindung verwirklicht sein. Die Zeichnung dient lediglich zur Erläuterung und zum besseren Verständnis der Erfindung und ist in keiner Weise einschränkend zu verstehen.

In den Zeichnungen zeigen:

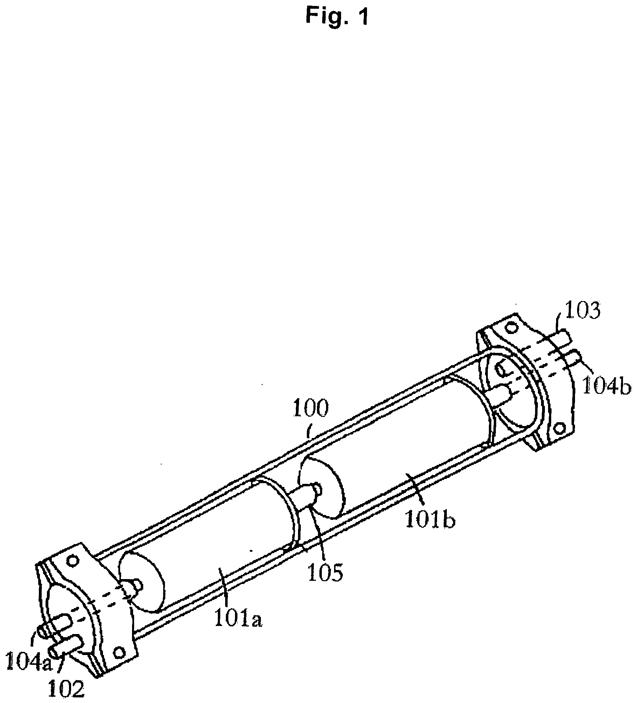

- Fig. 1:: Ausführungsform einer zur Durchführung des erfindungs-gemäßen Verfahrens geeigneten Membrantrennvorrichtung.

**Fig. 1** zeigt eine Ausführungsform der Membrantrennvorrichtung. Dargestellt ist das Druckrohr **100,** in dem die Membranmodule **101a** und **101b** hintereinander angeordnet sind. Bei beiden Modulen handelt es sich um Spiral-Wickelmodule. Aufzubereitendes Wasser tritt über den Eingang **102** in das Druckrohr **100** ein und strömt dann nacheinander die beiden Membranmodule **101a** und **101b** an. Im Membranmodul **101a** wird entsprechend Permeat mit einem geringen Salzgehalt und einer geringen elektrischen Leitfähigkeit erzeugt, im Membranmodul **101b** Permeat mit einem höheren Salzgehalt und auch einer höheren elektrischen Leitfähigkeit. Das Konzentrat wird schließlich über den Ausgang **103** abgeführt. Jedes der Membranmodule **101a** und **101b** weist einen separaten Abfluss für das erzeugte Permeat auf, nämlich die Abflüsse **104a** und **104b.** Beim Bauteil **105** handelt es sich bei klassischen Membrantrennvorrichtungen um eine Verbindung zwischen den Permeatsammelrohren der Membranmodule. Vorliegend ist diese Verbindung jedoch blockiert, schließlich ist eine Vermischung des in den Modulen **101a** und **101b** erhaltenen Permeats nicht erwünscht. Das Bauteil **105** fungiert damit lediglich noch als Abstandshalter.

## Patentansprüche

1. Mehrstufiges Verfahren zur Aufbereitung von Wasser, bei dem ein Wasserstrom in einer Membrantrennstufe und einer dieser nachgeschalteten Deionisationseinrichtung mit mindestens einer Konzentratkammer und mindestens einer Diluatkammer aufgereinigt wird, wobei der Wasserstrom in der Membrantrennstufe mittels mindestens zweier Membranmodule, die in einem gemeinsamen Druckbehälter derart angeordnet sind, dass sie von dem aufzubereitenden Wasser nacheinander angeströmt werden können, in einen Konzentratstrom und mindestens zwei Permeatströme unterschiedlicher elektrischer Leitfähigkeit aufgetrennt wird und wobei zumindest der Permeatstrom mit der höchsten elektrischen Leitfähigkeit mindestens teilweise in die mindestens eine Konzentratkammer und zumindest der Permeatstrom mit der niedrigsten elektrischen Leitfähigkeit mindestens teilweise in die mindestens eine Diluatkammer der nachgeschalteten Deionisationseinrichtung eingespeist wird, wobei in der Membrantrennstufe als Membranmodule ein Nanofiltrationsmodul und ein Umkehrosmosemodul derart angeordnet sind, dass das Umkehrosmosemodul vor dem Nanofiltrationsmodul angeströmt wird und wobei der Permeatstrom des Nanofiltrationsmoduls mit der mindestens einen Konzentratkammer und der Permeatstrom des Umkehrosmosemoduls mit der mindestens einen Diluatkammer gekoppelt ist.

2. Verfahren nach Anspruch 1, **dadurch gekennzeichnet, dass** aus der Deionisationseinrichtung austretendes Konzentrat zumindest teilweise rückgeführt und dem Wasserstrom stromaufwärts wieder zugesetzt wird.

3. Verfahren nach einem der vorhergehenden Ansprüche, **dadurch gekennzeichnet, dass** der Wasserstrom vor Einspeisung in die Membrantrennstufe mittels mindestens eines lonentauschers teilentsalzt und/oder enthärtet wird.

4. Verfahren nach einem der vorhergehenden Ansprüche, **dadurch gekennzeichnet, dass** der in die mindestens eine Konzentratkammer der Deionisationseinrichtung einzuspeisende Permeatstrom auf eine elektrische Leitfähigkeit im Bereich zwischen 5 µS/cm und 500 µS/cm eingestellt wird.

5. Anlage zur Aufbereitung von Wasser, umfassend
- mindestens eine Membrantrennvorrichtung zur Aufbereitung von Wasser, die derart ausgebildet ist, dass in ihr mindestens zwei Permeatströme mit unterschiedlicher elektrischer Leitfähigkeit erzeugt werden können, wobei die Membrantrennvorrichtung mindestens zwei Membranmodule umfasst, die in einem gemeinsamen Druckbehälter derart angeordnet sind, dass sie von dem aufzubereitenden Wasser nacheinander angeströmt werden können, wobei die mindestens zwei Membranmodule jeweils einen separaten Permeatabfluss aufweisen, durch welche die zwei Permeatströme aus dem Druckbehälter herausgeführt werden, wobei die Membrantrennvorrichtung als Membranmodule ein Nanofiltrationsmodul und ein Umkehrosmosemodul umfasst, die derart angeordnet sind, dass das Umkehrosmosemodul vor dem Nanofiltrationsmodul angeströmt wird, sowie
- mindestens eine Deionisationseinrichtung mit mindestens einer Konzentratkammer und mindestens einer Diluatkammer,
wobei der Permeatstrom des Nanofiltrationsmoduls mit der mindestens einen Konzentratkammer und der Permeatstrom des Umkehrosmosemoduls mit der mindestens einen Diluatkammer gekoppelt ist.

6. Wasseraufbereitungsanlage nach Anspruch 5, **dadurch gekennzeichnet, dass** der Druckbehälter ein Rohr ist, in dem die mindestens zwei Membranmodule in axialer Richtung hintereinander angeordnet sind.

7. Wasseraufbereitungsanlage nach Anspruch 5 oder Anspruch 6, **dadurch gekennzeichnet, dass** es sich bei den mindestens zwei Membranmodulen um Spiral-Wickelmodule handelt.

## Claims

1. Multi-stage process for treatment of water, wherein a water stream is purified in a membrane separation stage and a deionization means arranged downstream thereof having at least one concentrate chamber and at least one diluate chamber, wherein in the membrane separation stage the water stream is separated into a concentrate stream and at least two permeate streams of differing electrical conductivity by means of at least two membrane modules arranged in a common pressure vessel such that they may be traversed in series by the water to be treated and wherein at least the permeate stream having the highest electrical conductivity is at least partially introduced into the at least one concentrate chamber and at least the permeate stream having the lowest electrical conductivity is at least partially introduced into the at least one diluate chamber of the downstream deionization means, wherein as membrane modules a nanofiltration module and a reverse osmosis module are arranged in the membrane separation stage such that the reverse osmosis module is traversed before the nanofiltration module and wherein the permeate stream from the nanofiltration module is coupled with the at least one concentrate chamber and the permeate stream from the reverse osmosis module is coupled with the at least one diluate chamber.

2. Process according to Claim 1, **characterized in that** concentrate discharged from the deionization means is at least partially recycled and returned to the water stream at an upstream location.

3. Process according to any of the preceding claims, **characterized in that** before introduction into the membrane separation stage the water stream is partially deionized and/or softened using at least one ion exchanger.

4. Process according to any of the preceding claims, **characterized in that** the the permeate stream to be introduced into the at least one concentrate chamber of the deionization means is adjusted to an electrical conductivity in the range between 5 µS/cm and 500 µS/cm.

5. Plant for treatment of water comprising
- at least one membrane separation apparatus for treatment of water which is configured such that at least two permeate streams of differing electrical conductivity may be produced therein, wherein the membrane separation apparatus comprises at least two membrane modules arranged in a common pressure vessel such that they may be traversed in series by the water to be treated, wherein the at least two membrane modules each have a separate permeate drain through which the two permeate streams are discharged from the pressure vessel, wherein as membrane modules the membrane separation apparatus comprises a nanofiltration module and a reverse osmosis module which are arranged such that the reverse osmosis module is traversed before the nanofiltration module and
- at least one deionization means having at least one concentrate chamber and at least one diluate chamber,
wherein the permeate stream from the nanofiltration module is coupled with the at least one concentrate chamber and the permeate stream from the reverse osmosis module is coupled with the at least one diluate chamber.

6. Water treatment plant according to Claim 5, **characterized in that** the pressure vessel is a pipe in which the at least two membrane modules are arranged in series in the axial direction.

7. Water treatment plant according to Claim 5 or Claim 6, **characterized in that** the at least two membrane modules are spiral wound modules.

## Revendications

1. Procédé en plusieurs étapes de traitement de l'eau, avec lequel un courant d'eau est purifié dans un étage de séparation à membrane et un dispositif de déionisation, monté en aval de celui-ci et comprenant au moins une chambre de concentrat et au moins une chambre de diluat, le courant d'eau étant séparé dans l'étage de séparation à membrane, au moyen d'au moins deux modules à membrane qui sont disposés dans un récipient sous pression commun de telle sorte qu'ils sont atteints l'un après l'autre par le courant d'eau à traiter, en un courant de condensat et au moins deux courants de perméat ayant une conductivité électrique différente et au moins le courant de perméat ayant la conductivité électrique la plus élevée étant injecté au moins partiellement dans l'au moins une chambre de concentrat et au moins le courant de perméat ayant la conductivité électrique la plus faible au moins partiellement dans l'au moins une chambre de diluat du dispositif de déionisation monté en aval, les modules à membrane disposés dans l'étage de séparation à membrane étant un module de nanofiltration et un module d'osmose inverse, le module d'osmose inverse étant atteint par le courant avant le module de nanofiltration et le courant de perméat du module de nanofiltration étant couplé avec l'au moins une chambre de concentrat et le courant de perméat du module d'osmose inverse avec l'au moins une chambre de diluat.

2. Procédé selon la revendication 1, **caractérisé en ce que** le concentrat sortant du dispositif de déionisation est au moins partiellement recyclé et de nouveau ajouté au courant d'eau en amont.

3. Procédé selon l'une des revendications précédentes, **caractérisé en ce que** le courant d'eau est partiellement dessalé et/ou adouci au moyen d'un échangeur d'ions avant l'injection dans l'étage de séparation à membrane.

4. Procédé selon l'une des revendications précédentes, **caractérisé en ce que** le courant de perméat à injecter dans l'au moins une chambre de concentrat du dispositif de déionisation est réglé à une conductivité électrique dans la plage entre 5 µS/cm et 500 µS/cm.

5. Installation de traitement de l'eau, comprenant
au moins un dispositif de séparation à membrane destiné au traitement de l'eau, lequel est configuré de telle sorte qu'au moins deux courants de perméat ayant une conductivité électrique différente peuvent être générés dans celui-ci, le dispositif de séparation à membrane comportant au moins deux modules à membrane qui sont disposés dans un récipient sous pression commun de telle sorte qu'ils peuvent être atteints l'un après l'autre par le courant d'eau à traiter, les au moins deux modules à membrane possédant respectivement un écoulement de perméat séparé à travers lesquels les deux courants de perméat sont évacués hors du récipient sous pression, le dispositif de séparation à membrane comportant comme modules à membrane un module de nanofiltration et un module d'osmose inverse qui sont disposés de telle sorte que le module d'osmose inverse est atteint par le courant avant le module de nanofiltration, et
au moins un dispositif de déionisation comprenant au moins une chambre de concentrat et au moins une chambre de diluat,
le courant de perméat du module de nanofiltration étant couplé avec l'au moins une chambre de concentrat et le courant de perméat du module d'osmose inverse avec l'au moins une chambre de diluat.

6. Installation de traitement de l'eau selon la revendication 5, **caractérisée en ce que** le récipient sous pression est un tube dans lequel les au moins deux modules à membrane sont disposés l'un derrière l'autre dans le sens axial.

7. Installation de traitement de l'eau selon la revendication 5 ou 6, **caractérisée en ce que** les au moins deux modules à membrane sont des modules enroulés en spirale.
